# EUROPÄISCHE PATENTSCHRIFT

(11) **EP 3 319 742 B1**
(45) Veröffentlichungstag und Bekanntmachung des Hinweises auf die Patenterteilung: **21.08.2019**
(21) Anmeldenummer: 16751458.7
(22) Anmeldetag: 07.07.2016
(51) Int. Cl.: B21D 5/02, B21D 37/14, B23Q 3/155, B23Q 3/157, B65G 1/04

(54) **BIEGEWERKZEUG-SPEICHERVORRICHTUNG**
BENDING TOOL STORAGE DEVICE
DISPOSITIF DE STOCKAGE D'OUTILS DE PLIAGE

(30) Priorität: 08.07.2015 AT 505992015
(43) Veröffentlichungstag der Anmeldung: 16.05.2018
(73) Patentinhaber: TRUMPF Maschinen Austria GmbH & Co. KG., 4061 Pasching (AT)
(72) Erfinder: HASELBÖCK, Alfred, 4150 Rohrbach (AT); TIRAFERRI, Matteo, 10040 San Gillio (TO) (IT); TONDA ROCH, Andrea, 10141 Torino (IT); VIDOTTO, Giovanni, 10023 Chieri (TO) (IT)
(74) Vertreter: Burger, Hannes
(86) Internationale Anmeldenummer: PCT/AT2016/050244
(87) Internationale Veröffentlichungsnummer: WO 2017/004648

(56) Entgegenhaltungen:
- EP-A1- 1 364 742
- DE-A1- 2 031 442
- JP-A- S61 219 431

## Beschreibung

Die Erfindung betrifft eine Biegewerkzeug-Speichervorrichtung zum Speichern von Biegewerkzeugen, umfassend zumindest eine Speichereinheit, die einen äußeren Werkzeugspeicher umfasst, der ringförmig oder teilringförmig ist und eine Vielzahl von Führungsschienen zum Halten und Führen von Biegewerkzeugen aufweist. Die Erfindung bezieht sich auch auf eine Beschickungsvorrichtung, insbesondere Wechselvorrichtung, zum Beschicken einer Biegepresse mit Biegewerkzeugen und/oder zum Auswechseln von einem oder mehreren in einer Biegepresse eingesetzten Biegewerkzeugen, und auf ein Verfahren zum Ablegen zumindest eines Biegewerkzeuges in einer Speichervorrichtung und/oder zur Entnahme zumindest eines Biegewerkzeuges aus einer Speichervorrichtung.

Solch eine Biegewerkzeug-Speichervorrichtung, Beschickungsvorrichtung und solch ein Verfahren sind z.B. in der JP-A-61219431 offenbart.

Die CH668035A5 offenbart eine Biegepresse und einen Mechanismus zum Wechseln von Biegewerkzeugen. Biegewerkzeuge sind dabei in einer Speicher-vorrichtung jeweils an einem Haken aufgehängt. Das Wechseln erfolgt mittels eines um eine horizontale Schwenkachse drehbaren Tragarmes, der ein einzelnes Biegewerkzeug aufnimmt und von dem Werkzeug-speicher in die Biegepresse transferiert. Nachteilig an dieser Wechselvorrichtung ist, dass für die Bewegung des Tragarmes viel Raum zur Verfügung gestellt werden muss. Außerdem erfordert das Heranfahren und Verschwenken des Armes in Richtung der Werkzeug-halterung der Biegepresse einen komplexen Bewegungsablauf. Zudem besteht hohe Kollisionsgefahr zwischen Tragarm und Teilen der Biegepresse einerseits und dem Werkzeugspeicher andererseits. Ein hoher Zeitaufwand beim Wechseln ergibt sich auch dadurch, dass die Biegewerkzeuge nur einzeln, d.h. nacheinander transferiert werden können.

Die EP2143506B1 offenbart eine Vorrichtung zum Austauschen und Montieren eines mehrteiligen Werkzeugs für eine Abkantpresse. Eine komplexe und raum-fordernde Transfereinrichtung mit einem Greifer bzw. Haken entnimmt Biegewerk-zeuge aus dem Werkzeugspeicher und verbringt sie in die Biegepresse. Die Transfereinrichtung ist zu diesem Zwecke vertikal und horizontal verfahrbar; der Haken zusätzlich rotierbar.

Weitere aus dem Stand der Technik bekannte Speichervorrichtungen besitzen den Nachteil, dass deren Speicherkapazität nur sehr gering ist. D.h. die Anzahl der pro Raumeinheit in der Speichervorrichtung ablegbaren Biegewerkzeuge ist beschränkt bzw. sind Kollisionen zwischen einzelnen Biegewerkzeugen nicht auszuschließen.

Die sich aus dem Stand der Technik ergebenden Nachteile bestehen daher einerseits in der aufwendigen und raumfordernden Gestaltung des Werkzeugspeichers und der Transfereinrichtung, die die Biegewerkzeuge von dem Werkzeugspeicher in die Biegepresse transferiert. Andererseits ist die Speicherkapazität der Werkzeugspeicher stark begrenzt bzw. erfordert ein solcher Werkzeugspeicher sehr viel Raum. Dies resultiert insbesondere daraus, dass (wie in der CH668035A5) für jedes Werkzeug eine gesonderte Haltestruktur, z.B. in Form eines Hakens, erforderlich ist bzw. dass (wie in beiden oben genannten Druckschriften) der Werkzeugspeicher ausreichend (Zwischen-)Raum für das Einfahren der Transfereinrichtung aufweisen muss. Das Wechseln von Werkzeugen ist mitunter sehr zeit-aufwendig. Neben einer erhöhten Kollisionsgefahr der beweglichen Teile einschließlich der Biegewerkzeuge und der Transfer-einrichtung, ist der Kostenaufwand ein nachteiliger Faktor der bekannten Vorrichtungen.

Das Ziel der Erfindung besteht darin, diese Nachteile zu beseitigen bzw. zu entschärfen und eine Biegewerkzeug-Speichervorrichtung und/oder Beschickungsvorrichtung bereitzustellen, die platzsparender dimensioniert werden kann und deren Werkzeugspeicher eine höhere Speicherdichte aufweist, d.h. eine höhere Anzahl von Biegewerkzeugen pro Raumeinheit beherbergen kann. Das Beschicken und Wechseln von Biegewerkzeugen soll auf einfache und zuverlässige Weise zu bewerkstelligen sein. Die Gefahr von Kollisionen soll reduziert, vorzugsweise gänzlich beseitigt werden. Die Biegewerkzeug-Speichervorrichtung bzw. Beschickungseinrichtung und deren Betrieb sollen kostengünstiger werden.

Dieses Ziel wird mit einer Speichervorrichtung der eingangs genannten Art dadurch erreicht, dass die Speichereinheit zumindest einen inneren Werkzeugspeicher umfasst, der innerhalb des äußeren Werkzeugspeichers angeordnet ist und eine Vielzahl von Führungsschienen zum Halten und Führen von Biegewerkzeugen aufweist, und dass der äußere Werkzeugspeicher und der innere Werkzeugspeicher relativ zueinander drehbar sind, wobei zumindest eine Führungsschiene des äußeren Werkzeugspeichers in verschiedenen Relativdrehstellungen zwischen äußerem Werkzeugspeicher und innerem Werkzeugspeicher jeweils mit einer anderen Führungsschiene des inneren Werkzeugspeichers in fluchtender Ausrichtung steht.

Durch das Vorsehen zumindest eines inneren Werkzeugspeichers wird einerseits die Speicherkapazität der Speichervorrichtung erhöht, andererseits das Ablegen und Extrahieren einzelner Biegewerkzeuge in bzw. aus den Werkzeugspeichern vereinfacht. Das Gegeneinander-Verdrehen der Werkezugspeicher ermöglicht komplexe Rangiervorgänge, bei denen die Biegewerkzeuge entlang der Führungsschienen verschoben werden.

Die Führungsschienen des äußeren Werkzeugspeichers wie auch die Führungsschienen des inneren Werkzeugspeichers sind jeweils durch Winkelabstände voneinander beabstandet; die Führungsschienen verlaufen jeweils in einer Richtung von innen nach außen.

Im Falle eines ringförmigen oder teilringförmigen Werkzeugspeichers verlaufen die Führungsschienen vom Innenumfang in Richtung Außenumfang des Werkzeugspeichers. Im Falle eines scheibenförmigen (inneren) Werkzeugspeichers von einem inneren Bereich in Richtung Außenumgang. Die Richtungen, in der die Führungsschienen verlaufen, weisen somit jeweils eine radiale Komponente auf.

In einer Ausführungsform verlaufen die Führungsschienen des äußeren Werkzeugspeichers und die Führungsschienen des zumindest einen inneren Werkzeugspeichers jeweils in radialer Richtung (die Verlaufs-Richtung der Führungsschienen weist hier keine tangentiale Komponente auf) oder in einer Richtung mit radialer Komponente.

In einer alternativen Ausführungsform verlaufen die Führungsschienen des äußeren Werkzeugspeichers und die Führungsschienen des zumindest einen inneren Werkzeugspeichers jeweils in Richtungen mit tangentialer Komponente. Die Führungsschienen verlaufen auch bei dieser Ausführungsform von innen nach außen, aber zur (rein) radialen Richtung geneigt. Die Länge der einzelnen Führungsschienen kann durch diese Maßnahme vergrößert werden. In dieser Ausführungsform weisen die Verlaufs-Richtungen der Führungsschienen - zusätzlich zu einer radialen Komponente - eine tangentiale Komponente auf. Die radiale bzw. tangentiale Richtungs-Komponente ist jeweils auf die Ring-, Teilring-, oder Scheibenform (bzw. den Mittelpunkt) des jeweiligen Werkzeugspeichers bezogen.

Die radiale Richtung bzw. die radiale Richtungs-Komponente der Führungsschienen bezieht sich jeweils auf den Mittelpunkt, der durch die Ringform, Teilringform oder Scheibenform (bzw. Kreisform) eines Werkzeugspeichers definiert ist. Aufgrund des Verlaufes der einzelnen Führungsschienen jeweils in radialer Richtung bzw. in einer Richtung mit radialer Komponente vergrößert sich der Abstand zwischen benachbarten Führungsschienen eines Werkzeugspeichers in radialer Richtung (d.h. vom Innenumfang in Richtung Außenumfang). D.h. benachbarte Führungsschienen weisen einen Winkelabstand voneinander auf (bzw. sind nicht parallel zueinander).

Der der äußere Werkzeugspeicher und der zumindest eine innere Werkzeugspeicher befinden sich in einer gemeinsamen Ebene (bzw. sind in eine gemeinsame Ebene bringbar), sodass ein Biegewerkzeug von einem Werkzeugspeicher in den anderen Werkzeugspeicher verschoben werden kann.

Mit der erfindungsgemäßen Speichervorrichtung ist es zudem möglich, mehrere Biegewerkzeuge in einer Führungsschiene in einer Reihe hintereinander unterzubringen, wodurch die Speicherdichte des Werkzeugspeichers weiter erhöht wird. Um nun aus dieser Reihe ein erstes Biegewerkzeug zu extrahieren bzw. zu vereinzeln, können Biegewerkzeuge vorübergehend in den jeweils anderen Werkzeugspeicher verschoben und dort (zwischen)gespeichert werden. Außerdem ermöglichen die beiden gegeneinander verdrehbaren Werkzeugspeicher, dass Biegewerkzeuge von einer (bzw. einer ersten) Führungsschiene des Werkzeugspeichers in eine andere (bzw. zweite) Führungsschiene desselben Werkzeugspeichers verschoben werden können. Solche Rangiervorgänge erfolgen ausschließlich durch Verschiebevorgänge von Biegewerkzeugen entlang von Führungs-schienen und Relativdrehung(en) zwischen den Werkzeugspeichern.

Ein Vorteil der Erfindung besteht darin, dass die Biegewerkzeuge während des Rangiermanövers ununterbrochen in Führungsschienen eingesetzt bleiben (d.h. nicht aus den Führungsschienen entfernt werden müssen). Der Transfer eines Biegewerkzeuges von einer Führungsschiene (z.B. des äußeren Werkzeugspeichers) in eine andere Führungsschiene (z.B. des inneren Werkzeugspeichers) erfolgt dadurch, dass die beiden Führungsschienen in zueinander fluchtende Ausrichtung gebracht werden (wodurch ein durchgehender Führungsabschnitt entsteht), und durch Verschieben des Biegewerkzeuges von der einen Führungsschiene in die andere Führungsschiene. Zwischenschritte, die das Herausnehmen eines Biegewerkzeuges aus einer Führungsschiene und das Wiedereinsetzen beinhalten, sind aufgrund des erfindungsgemäßen Prinzips nicht erforderlich.

Um eine Relativbewegung (Drehung) zwischen äußerem und innerem Werkzeugspeicher zu verwirklichen, ist es möglich, den äußeren Werkzeugspeicher und/oder den inneren Werkzeugspeicher drehbar auszubilden. Durch die Relativdrehung kann/können die Führungsschiene(n) des einen Werkzeugspeichers mit verschiedenen Führungsschienen des anderen Werkzeugspeichers in fluchtende Ausrichtung gelangen.

Durch die erfindungsgemäße Maßnahme kann einerseits der Beschickungsvor-gang beschleunigt und effizienter gestaltet werden, andererseits erhöht sich die mögliche Speicherdichte von Biegewerkzeugen in der Speichervorrichtung.

Eine bevorzugte Ausführungsform zeichnet sich dadurch aus, dass der zumindest eine innere Werkzeugspeicher ringförmig oder teilringförmig ist. Dadurch ist er an die Form des äußeren Werkzeugspeichers angepasst und kann durch Drehen unterschiedliche Führungsschienen miteinander in gemeinsame Flucht bringen. Solche Anordnungen erhöhen zudem die Speicherdichte.

Der äußere Werkzeugspeicher und/oder der innere Werkzeugspeicher können jeweils einen geschlossenen Ring (ringförmig) oder einen an einer Seite offenen Ring (teilringförmig) bilden. Hinsichtlich der Speicherdichte werden ringförmige Werkzeugspeicher (geschlossener Ring) bevorzugt, jedoch können aus anderen Gründen (z.B. Platzverhältnisse) teilringförmige Werkzeugspeicher verwendet werden. Der Innere Werkzeugspeicher könnte anstelle einer Ringform auch in Form einer Scheibe ausgebildet sein.

Eine bevorzugte Ausführungsform zeichnet sich dadurch aus, dass der zumindest eine innere Werkzeugspeicher konzentrisch zum äußeren Werkzeugspeicher angeordnet ist. Hier fallen die Mittelpunkte, die durch die Ringform, Teilringform oder Scheibenform der Werkzeug-speicher definiert sind, zusammen. Dies ermöglicht neben einer platzsparenden Anordnung auch eine Erhöhung der Speicherdichte. Außerdem besteht die Möglichkeit, die Werkzeug-speicher um eine gemeinsame Drehachse drehen zu lassen.

Eine bevorzugte Ausführungsform zeichnet sich dadurch aus, dass der Innendurchmesser des äußeren Werkzeugspeichers im Wesentlichen dem Außendurchmesser des inneren Werkzeugspeichers entspricht. Hier ist allenfalls ein kleiner Spalt zwischen den Werkzeugspeichern vorhanden, sodass die Biegewerkzeuge direkt von einem Werkzeugspeicher auf den anderen verfahren werden können.

Eine Ausführungsform zeichnet sich dadurch aus, dass die Breite der Werkzeugspeicher unterschiedlich ist. Dadurch können bevorzugt kürzere Biegewerkzeuge in dem weniger breiten Werkzeugspeicher und längere Biegewerkzeuge in dem breiteren Werkzeugspeicher gespeichert werden. Unter der ,Breite' ist die (radiale) Erstreckung eines Werkzeugspeichers zwischen seinem Außenumfang und seinem Innenumfang zu verstehen.

Eine bevorzugte Ausführungsform zeichnet sich dadurch aus, dass der äußere Werkzeugspeicher und der innere Werkzeugspeicher jeweils einen geschlossenen Ring bilden und dass die Anzahl der Führungsschienen des äußeren Werkzeugspeichers größer, vorzugsweise um zumindest 1,3mal größer, besonders bevorzugt um zumindest 1,5mal größer, ist als die Anzahl der Führungsschienen des inneren Werkzeugspeichers. Durch diese Maßnahme wird der zur Verfügung stehende Raum bestmöglich genutzt und es können mehr Biegewerkzeuge (im äußeren Werkzeugspeicher) abgelegt werden. Dabei wird ausgenutzt, dass die Erstreckung des äußeren Werkzeugspeichers in Umfangsrichtung größer ist als die Erstreckung des inneren Werkzeugspeichers in Umfangsrichtung. Bei gleichem oder ähnlichem seitlichem Abstand zu benachbarten Führungsschienen können auf dem äußeren Werkzeugspeicher mehr Führungsschienen untergebracht werden.

Eine bevorzugte Ausführungsform zeichnet sich dadurch aus, dass der Winkelabstand zwischen benachbarten Führungsschienen des äußeren Werkzeugspeichers kleiner ist als der Winkelabstand zwischen benachbarten Führungsschienen des inneren Werkzeugspeichers. Unter dem Winkelabstand ist jener Winkel zu verstehen, um den benachbarte Führungsschienen zueinander geneigt sind. Durch diese Maßnahme kann die Speicherkapazität deutlich erhöht werden.

Bevorzugt sind in dem äußeren Werkzeugspeicher die Winkelabstände zwischen benachbarten Führungsschienen jeweils höchstens so groß wie ein erster Winkel, und sind in dem inneren Werkzeugspeicher die Winkelabstände zwischen benachbarten Führungsschienen jeweils zumindest so groß wie ein zweiter Winkel, wobei der zweite Winkel größer ist als der erste Winkel. Durch diese Maßnahme kann ebenfalls die Speicherdichte erhöht werden.

Der zweite Winkel kann insbesondere zumindest 1,3mal, bevorzugt zumindest 1,5mal, besonders bevorzugt zumindest 2mal, so groß sein wie der erste Winkel.

Eine bevorzugte Ausführungsform zeichnet sich dadurch aus, dass in den Führungsschienen des äußeren Werkzeugspeichers kürzere Biegewerkzeuge gehalten sind als in den Führungs-schienen des inneren Werkzeugspeichers. Durch eine solche Aufteilung kann der zur Verfügung stehende Platz optimal ausgenutzt werden. Der innere Werkzeugspeicher ist ausgebildet, um größere Biegewerkzeuge zu beherbergen, wobei durch entsprechenden Abstand zwischen den Führungsschienen gewährleistet ist, dass keine Kollision zwischen Biegewerkzeugen auftreten. Die kürzeren Biegewerkzeuge werden auf dem äußeren Werkzeugspeicher vorzugsweise in einer Position gehalten, die näher dem Außenumfang als dem Innenumfang des äußeren Werkzeugspeichers liegt. Dadurch werden - bei gleichzeitig hoher Speicherdichte - ebenfalls Kollisionen vermieden, da der Abstand zwischen benachbarten Führungsschienen im Bereich des Außenumfanges größer ist als im Bereich des Innenumfanges des äußeren Werkzeugspeichers.

Eine bevorzugte Ausführungsform zeichnet sich dadurch aus, dass der äußere Werkzeugspeicher und der zumindest eine innere Werkzeugspeicher drehbar sind, vorzugsweise um eine gemeinsame Drehachse. Dadurch, dass beide Werkzeugspeicher für sich drehbar sind (insbesondere relativ zu einem Rahmen, auf dem beide Werkzeugspeicher gelagert sind), werden die Optionen für Rangiervorgänge erhöht, wodurch der Beschickungsvorgang vereinfacht und verkürzt werden kann.

Bevorzugt weisen der äußere Werkzeugspeicher und der innere Werkzeugspeicher der Speichereinheit jeweils einen eigenen Drehantrieb auf. Dies ermöglicht ein Drehen der Werkzeug-speicher gleichzeitig und unabhängig voneinander.

In einer alternativen Ausführungsform weisen zumindest zwei Werkzeugspeicher der Speichereinheit einen gemeinsamen Drehantrieb auf, von dem sie einzeln abkoppelbar sind. In dieser Ausführungsform kann zumindest ein Drehantrieb eingespart werden. Eine betätigbare Kupplung sorgt für das An- bzw. Abkoppeln der Werkzeugspeicher von dem Drehantrieb.

Eine bevorzugte Ausführungsform zeichnet sich dadurch aus, dass die Speichereinheit zumindest einen Sensor, insbesondere einen Winkelsensor, zur Bestimmung der Drehstellung des äußeren Werkzeugspeichers und/oder des zumindest einen inneren Werkzeugspeichers umfasst. Dies ermöglicht eine Automatisierung der Speicher- und Beschickungsvorgänge.

Eine bevorzugte Ausführungsform zeichnet sich dadurch aus, dass innerhalb des inneren Werkzeugspeichers eine Transfereinrichtung zum Verschieben der Biegewerkzeuge entlang der Führungsschienen angeordnet ist.

Eine bevorzugte Ausführungsform zeichnet sich dadurch aus, dass die Speichereinheit zumindest zwei innere Werkzeugspeicher umfasst, die relativ zueinander drehbar sind. Dadurch kann die Speicherkapazität weiter erhöht werden. Auch der bzw. die weitere(n) innere(n) Werkzeugspeicher weisen von innen nach außen verlaufende Führungsschienen auf, die durch Relativdrehung mit Führungsschienen des benachbarten Werkzeugspeichers in fluchtende Ausrichtung gelangen können. Eine Speichereinheit kann auch eine Vielzahl an konzentrisch angeordneten (teil-)ringförmigen Werkzeugspeicher aufweisen.

Das Ziel wird auch erreicht mit einer Speichervorrichtung zum Speichern von Biegewerkzeugen, umfassend zumindest eine Speichereinheit, die zumindest einen Werkzeugspeicher umfasst, der ringförmig oder teilringförmig ist und eine Vielzahl von (z.B. in radialer Richtung oder in einer Richtung mit tangentialer Komponente verlaufenden) Führungsschienen zum Halten und Führen von Biegewerkzeugen aufweist, insbesondere nach einer der vorhergehenden Ausführungsformen, wobei der zumindest eine Werkzeugspeicher entlang seines Umfanges einen ersten Abschnitt aufweist, in dem der Winkelabstand zwischen benachbarten Führungsschienen kleiner ist als in einem zweiten Abschnitt entlang seines Umfanges. Durch diese Maßnahme kann die Speicherdichte dadurch erhöht werden, dass in dem zweiten Abschnitt mehr Führungsschienen pro Winkeleinheit angeordnet sind und demnach auch mehr Biegewerkzeuge aufgenommen werden können. Benachbarte Führungsschienen des zweiten Abschnittes können dabei derart voneinander beabstandet sein, dass im Bereich des Außenumfanges (kurze) Biegewerkzeuge nebeneinander (d.h. in benachbarten Führungsschienen) abgelegt werden können, ohne einander zu berühren. Im Bereich des Innenumfanges hingegen kann der seitliche Abstand zwischen benachbarten Führungsschienen bereits so klein ist, dass es hier zu Kollisionen kommt, wenn zwei Biegewerke gleichzeitig durch diesen Bereich geschoben werden. Der Vorteil, mehr Biegewerkzeuge in Führungsschienen nebeneinander unterbringen zu können, überwiegt jedoch.

Eine bevorzugte Ausführungsform zeichnet sich dadurch aus, dass in dem ersten Abschnitt die Winkelabstände zwischen benachbarten Führungsschienen jeweils höchstens so groß sind wie ein erster Winkel und dass in dem zweiten Abschnitt die Winkelabstände zwischen benachbarten Führungsschienen jeweils zumindest so groß sind wie ein zweiter Winkel, wobei der zweite Winkel größer ist als der erste Winkel. Durch diese Maßnahme wird eine Erhöhung der Speicherdichte erreicht. In dem ersten Abschnitt sind mehr Führungsschienen pro Winkeleinheit angeordnet (als in dem zweiten Abschnitt) und können demnach auch mehr Biegewerkzeuge aufgenommen werden. Vor allem kann durch die erfindungsgemäße Lösung der Tatsache Rechnung getragen werden, dass Biegewerkzeuge unterschiedliche Größe und Form aufweisen. So kann der erste Abschnitt gezielt dazu verwendet werden, kürzere und/oder schmälere Biegewerkzeuge aufzunehmen. Hingegen können im zweiten Abschnitt längere und/oder breitere Biegewerkzeuge untergebracht werden. Bei entsprechender Speicherstrategie kann dadurch die erreichbare Speicherdichte, also die Anzahl der Biegewerkzeuge pro Raumeinheit, erhöht werden.

An dieser Stelle sei erwähnt, dass der Biegewerkzeugspeicher auch zwei oder mehrerer erste und/oder zweite Abschnitte aufweisen kann, die sich z.B. entlang des Umfanges des Biegewerkzeugspeichers abwechseln.

Eine bevorzugte Ausführungsform zeichnet sich dadurch aus, dass in dem ersten Abschnitt die Winkelabstände zwischen benachbarten Führungsschienen jeweils so groß sind wie der erste Winkel und/oder dass in dem zweiten Abschnitt die Winkelabstände zwischen benachbarten Führungsschienen jeweils so groß sind wie der zweite Winkel. Dadurch kann im ersten und/oder zweiten Abschnitt eine Anordnung äquidistanter (d.h. denselben Winkelabstand voneinander aufweisender) Führungsschienen erreicht werden.

Eine bevorzugte Ausführungsform zeichnet sich dadurch aus, dass der zweite Winkel zumindest 1,3mal, bevorzugt zumindest 1,5mal, besonders bevorzugt zumindest 2mal, so groß ist wie der erste Winkel. Die Packungsdichte im ersten Abschnitt, also die Anzahl der zu speichernden Biegewerkzeuge pro Raumeinheit, kann somit um den entsprechenden Faktor erhöht werden.

Eine bevorzugte Ausführungsform zeichnet sich dadurch aus, dass in den Führungsschienen des ersten Abschnittes kürzere Biegewerkzeuge gehalten sind als in den Führungsschienen des zweiten Abschnittes. Die Anordnung von längeren Biegewerkzeugen in benachbarten Führungsschienen des ersten Abschnittes führt zu keinen Problemen, da dort der Winkelabstand zwischen den Führungsschienen ohnedies größer ist.

Eine bevorzugte Ausführungsform zeichnet sich dadurch aus, dass sich der zumindest eine erste Abschnitt und/oder der zumindest eine zweite Abschnitt über einen Winkelbereich von zumindest 30°, vorzugsweise zumindest 60°, besonders bevorzugt zumindest 90°, erstrecken. Dadurch kann eine substantielle Erhöhung der Speicherdichte erreicht werden.

Eine bevorzugte Ausführungsform zeichnet sich dadurch aus, dass der erste Abschnitt und/oder der zweite Abschnitt zumindest 3, bevorzugt zumindest 5, besonders bevorzugt zumindest 10, Führungsschienen umfassen.

Eine bevorzugte Ausführungsform zeichnet sich dadurch aus, dass in Führungsschienen des ersten Abschnittes kürzere Biegewerkzeuge gehalten sind als in Führungsschienen des zweiten Abschnittes, wobei die Biegewerkzeuge den - auf die radiale Richtung bezogen - äußeren Enden der Führungsschienen näher sind als den inneren Enden, vorzugsweise im Bereich der äußeren Enden der Führungsschienen angeordnet sind. Eine solche Speicherstrategie nimmt auf die Größe und Form der Biegewerkzeuge Rücksicht, wodurch die erreichbare Speicherdichte erhöht wird.

Eine bevorzugte Ausführungsform zeichnet sich dadurch aus, dass in dem ersten Abschnitt der Abstand zwischen den Längsachsen benachbarter Führungsschienen im Bereich ihrer - auf die radiale Richtung bezogen - inneren Enden höchstens so groß, vorzugsweise kleiner, ist als die Abmessung eines in einer Führungsschiene des ersten Abschnittes gehaltenen Biegewerkzeuges senkrecht zur Richtung der Führungsschiene. Der zur Verfügung stehende Raum wird dadurch optimal genützt, in dem die Führungsschienen so nah aneinander angeordnet werden wie möglich.

Eine bevorzugte Ausführungsform zeichnet sich dadurch aus, dass die Speichervorrichtung zumindest zwei Speichereinheiten aufweist, die übereinander und vorzugsweise konzentrisch zueinander angeordnet sind. Dadurch kann ein Biegewerkzeugreservoir mit großer Speicherkapazität geschaffen werden.

Eine bevorzugte Ausführungsform zeichnet sich dadurch aus, dass die Führungsschienen einer ersten Speichereinheit und die Führungsschienen einer zweiten Speichereinheit einander zugewandt sind. Die erste Speichereinheit stellt somit einen Unterwerkzeug-Speicher und die zweite Speichereinheit einen Oberwerkzeugspeicher dar. Oberwerkzeug- und Unterwerkzeugeinheiten sind bevorzugt (und entsprechend der Anordnung der Werkzeughalterungen in einer Biegepresse) übereinander angeordnet.

Eine bevorzugte Ausführungsform zeichnet sich dadurch aus, dass die Speichervorrichtung zumindest eine Zwischenablage umfasst, die zumindest eine Führungsschiene zum Halten und Führen von Biegewerkzeugen aufweist, wobei die Zwischenablage zwischen den Speichereinheiten verfahrbar ist. Dadurch kann eine Biegepresse aus verschiedenen Speichereinheiten mit Biegewerkzeugen beschickt werden.

Das Ziel wird auch erreicht mit einer Beschickungsvorrichtung, insbesondere Wechselvorrichtung, zum Beschicken einer Biegepresse mit Biegewerkzeugen und/oder zum Auswechseln von einem oder mehreren in einer Biegepresse eingesetzten Biegewerkzeugen, umfassend eine erfindungsgemäße Speichervorrichtung. Die Beschickungsvorrichtung kann eine Transfereinrichtung zum Verschieben von Biegewerkzeugen entlang von Führungsschienen umfassen.

Eine bevorzugte Ausführungsform zeichnet sich dadurch aus, dass die Transfereinrichtung ein entlang der Führungsschiene(n) verfahrbares, vorzugsweise in der Führungsschiene geführtes, Shuttle - insbesondere in Form eines Schlittens oder Wagens - umfasst.

Eine bevorzugte Ausführungsform zeichnet sich dadurch aus, dass die Transfer-einrichtung ein längliches, vorzugsweise flexibles Zug- und/oder Druckübertragungsmittel, insbesondere ein Band, ein Seil, eine Stange oder eine Kette, um-fasst, und dass das Shuttle an das Zug-und/oder Druckübertragungsmittel angebunden ist. Durch den Einsatz eines Zug- und/oder Druckübertragungsmittels kann der Verfahrantrieb der Transfereinrichtung fern der Führungsschienen angeordnet werden. Die Transfereinrichtung kann dadurch außerdem gewichtsarm und platzsparend konzipiert werden. Das Übertragungsmittel kann zur Übertragung von Zugkräften oder Druckkräften oder Zug- und Druckkräften ausgebildet sein. Wenn die Beschickung bzw. das Wechseln der Biegewerkzeuge nur von einem Ende der Schiene aus erfolgt, kommt ein Zug- und Druckübertragungsmittel zum Einsatz.

Die Transfereinrichtung, insbesondere das Shuttle, weist vorzugsweise eine lösbare Kupplung zum Anbinden eines Biegewerkzeuges auf. Dadurch kann die Transfereinrichtung die Biegewerkzeuge nicht nur schieben, sondern auch ziehen. Die Kupplung weist eine freigebende (gelöste) Stellung und eine ankoppelnde Stellung auf und ist durch einen Aktuator betätigbar. Die Kupplung kann z.B. als mechanische Kupplung, magnetische Kupplung oder als Ansaugvorrichtung ausgebildet sein. Die Kupplung kann eine kraftschlüssige und/oder formschlüssige Verbindung mit dem Biegewerkzeug herstellen. Der Aktuator zum Betätigen der Kupplung kann eine Zylinder-Kolben-Einheit, einen Linearantrieb, einen Motor, eine Unterdruckeinrichtung und/oder eine elektromagnetische Einrichtung umfassen.

In einer alternativen Variante könnte das Shuttle auch selbstfahrend ausgebildet sein, wobei der Verfahrantrieb in oder an dem Shuttle angeordnet ist. Die Transfereinrichtung kann auf diese Weise besonders bauteilsparend konstruiert werden. Die Ansteuerung des Shuttles könnte drahtgebunden, aber auch per Funk erfolgen.

Das Ziel wird auch erreicht mit einer Anordnung einer Biegepresse und einer da-ran gekoppelten Beschickungsvorrichtung gemäß der vorliegenden Erfindung zum Beschicken der Biegepresse mit Biegewerkzeugen, wobei die Biegepresse eine als Führungsschiene ausgebildete Werkzeughalterung zum Halten und Führen von Biegewerkzeugen aufweist. Biegepresse und Beschickungsvorrichtung können einen durchgehenden Führungsabschnitt ausbilden, sodass ein Biegewerkzeug nur durch Verschieben entlang von Führungsschienen von der bzw. in die Biegepresse transferiert werden kann.

Das Ziel wird auch mit einem Verfahren zum Ablegen zumindest eines Biegewerkzeuges in einer Speichervorrichtung und/oder zur Entnahme zumindest eines Biegewerkzeuges aus einer erfindungsgemäßen Speichervorrichtung, wobei das zumindest eine Biegewerkzeug entlang von Führungsschienen der Werkzeugspeicher verschoben wird.

Eine bevorzugte Ausführungsform zeichnet sich dadurch aus, dass das Verfahren zumindest einen Rangiervorgang umfasst, bei dem zumindest ein Biegewerkzeug von einer Führungsschiene des einen Werkzeugspeicher in eine Führungsschiene des anderen Werkzeugspeichers verschoben wird und bei dem der äußere Werkzeugspeicher und der innere Werkzeugspeicher relativ zueinander gedreht werden. Der Beschickungs- oder Ablagevorgang kann dadurch stark vereinfacht werden

Eine bevorzugte Ausführungsform zeichnet sich dadurch aus, dass in den Führungsschienen des äußeren Werkzeugspeichers kürzere Biegewerkzeuge abgelegt werden als in den Führungsschienen des inneren Werkzeugspeichers. Durch entsprechende Aufteilung von kürzeren und längeren Biegewerkzeugen kann - wie bereits oben erläutert - die Anzahl der unterzubringenden Biegewerkzeuge erhöht werden.

Eine bevorzugte Ausführungsform zeichnet sich dadurch aus, dass in den Führungsschienen des ersten Abschnittes kürzere Biegewerkzeuge abgelegt werden als in den Führungsschienen des zweiten Abschnittes. Hier weist der Werkzeugspeicher entlang seines Umfanges einen ersten Abschnitt auf, in dem der Winkelabstand zwischen benachbarten Führungsschienen kleiner ist als in einem zweiten Abschnitt entlang seines Umfanges.

In einer weiteren Ausführungsform werden zumindest eine Führungsschiene des äußeren Werkzeugspeichers und zumindest eine Führungsschiene des inneren Werkzeugspeichers als Durchgangsführung (d.h. nicht zum Speichern von Werkzeugen) verwendet. Wenn diese beiden Führungsschienen in fluchtender Ausrichtung stehen, kann die Transfereinrichtung den Transfervorgang eines Biegewerkzeuges von oder aus der Biegepresse durchführen, in dem sie durch die Durchgangsführung bewegt wird.

Zum besseren Verständnis der Erfindung wird diese anhand der nachfolgenden Figuren näher erläutert.

Es zeigen jeweils in stark vereinfachter, schematischer Darstellung:
- Fig. 1: eine erfindungsgemäße Speichervorrichtung,
- Fig. 2: die Speichervorrichtung aus Fig. 1 mit abgelegten Biegewerkzeugen;
- Fig. 3: einen Werkzeugspeicher mit Abschnitten unterschiedlichen Winkelabstandes zwischen benachbarten Führungsschienen;
- Fig. 4: eine Speichervorrichtung mit mehreren Speichereinheiten;
- Fig. 5: eine Ausführungsform mit drei Werkzeugspeichern;
- Fig. 6: eine Transfereinrichtung mit Werkzeugspeicher;
- Fig. 7: eine Anordnung aus Biegepresse und Beschickungsvorrichtung;
- Fig. 8: eine Ausführungsform mit Führungsschienen, deren Verlaufs-Richtung eine tangentiale Komponente aufweist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen sind und diese Lageangaben bei einer Lageänderung sinngemäß auf die neue Lage zu übertragen.

Die Ausführungsbeispiele zeigen mögliche Ausführungsvarianten der Speichervorrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Vor allem können die einzelnen in den Figuren gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus der Speichervorrichtung bzw. sonstiger Bestandteile der Erfindung diese bzw. deren Bestandteile teilweise unmaßstäblich und/oder vergrößert und/oder verkleinert dargestellt wurden.

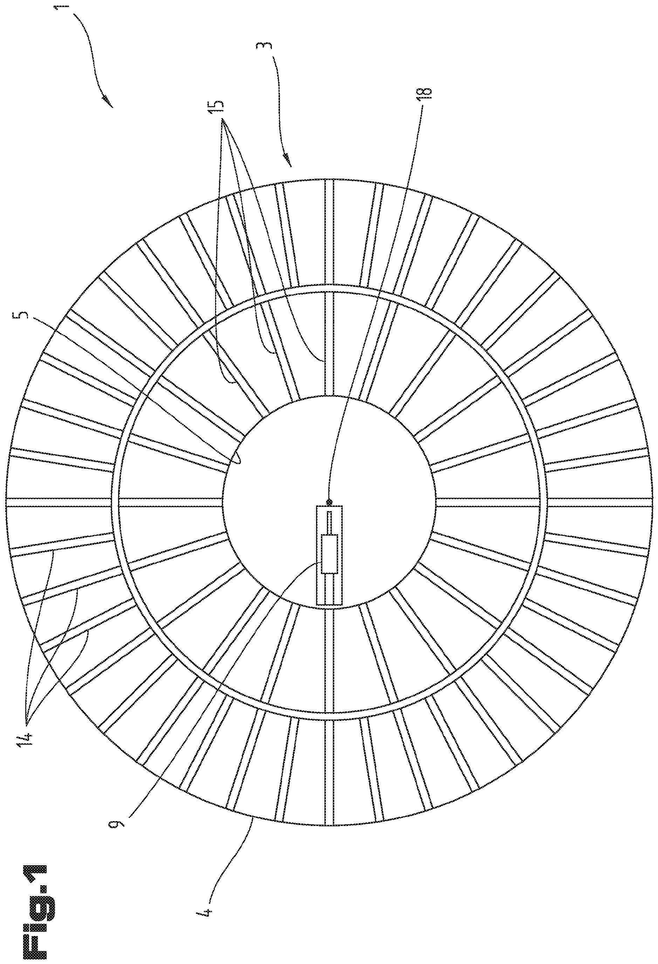

Fig. 1 zeigt ein Biegewerkzeug-Speichervorrichtung 1 zum Speichern von Biegewerkzeugen 2. Eine Speichereinheit 3 der Speichervorrichtung 1 umfasst einen äußeren Werkzeugspeicher 4, der ringförmig (alternativ: teilringförmig) ist und eine Vielzahl von in radialer Richtung verlaufenden Führungsschienen 14 zum Halten und Führen von Biegewerkzeugen 2 aufweist.

Die Speichereinheit 3 umfasst einen inneren Werkzeugspeicher 5, der innerhalb des äußeren Werkzeugspeichers 4 angeordnet ist und ebenfalls eine Vielzahl von in radialer Richtung verlaufenden Führungsschienen 15 zum Halten und Führen von Biegewerkzeugen 2 aufweist. Der äußere Werkzeugspeicher 4 und der innere Werkzeugspeicher 5 sind relativ zueinander drehbar, wobei zumindest eine Führungsschiene 14 des äußeren Werkzeugspeichers 4 in verschiedenen Relativdrehstellungen zwischen äußerem Werkzeugspeicher 4 und innerem Werkzeugspeicher 5 jeweils mit einer anderen Führungsschiene 15 des inneren Werkzeugspeichers 5 in fluchtender Ausrichtung steht.

Der innere Werkzeugspeicher 5 ist ebenfalls ringförmig (alternativ: teilringförmig). Die Werkzeugspeicher 4, 5 sind konzentrisch zueinander angeordnet und um eine gemeinsame Drehachse 18 drehbar.

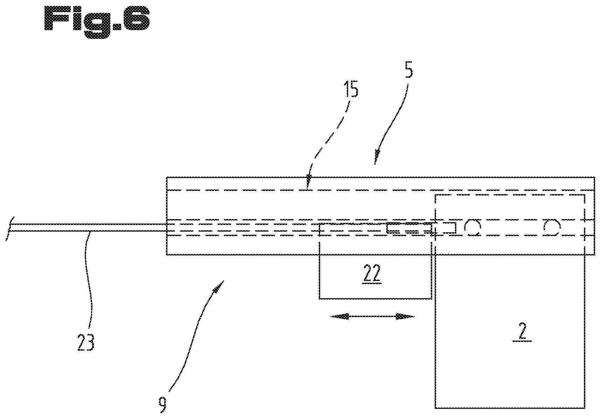

Innerhalb des inneren Werkzeugspeichers 5 ist eine Transfereinrichtung 9 zum Verschieben der Biegewerkzeuge 2 entlang der Führungsschienen 14, 15 angeordnet. Die Transfereinrichtung (die in Fig. 6 im Detail dargestellt ist) kann ein entlang der Führungsschiene(n) verfahrbares, vorzugsweise in der Führungsschiene geführtes, Shuttle 22 - insbesondere in Form eines Schlittens oder Wagens - umfassen.

Ebenfalls kann die Transfereinrichtung 9 ein längliches, vorzugsweise flexibles Zug- und/oder Druckübertragungsmittel 23, insbesondere ein Band, ein Seil, eine Stange oder eine Kette, umfassen. Das Shuttle 22 ist an das Zug- und/oder Druckübertragungsmittel 23 angebunden. Die Transfereinrichtung 9, insbesondere das Shuttle 22, weist vorzugsweise eine lösbare Kupplung zum Anbinden eines Biegewerkzeuges 2 auf. Dadurch kann die Transfereinrichtung die Biegewerkzeuge nicht nur schieben, sondern auch ziehen.

Der Innendurchmesser des äußeren Werkzeugspeichers 4 entspricht im Wesentlichen dem Außendurchmesser des inneren Werkzeugspeichers. Wie aus der bevorzugten Ausführungsform der Fig. 1 ersichtlich bilden der äußere Werkzeugspeicher 4 und der innere Werkzeug-speicher 5 jeweils einen geschlossenen Ring Die Anzahl der Führungsschienen 14 des äußeren Werkzeugspeichers 4 ist größer (hier: doppelt so groß) als die Anzahl der Führungsschienen 15 des inneren Werkzeugspeichers 5.

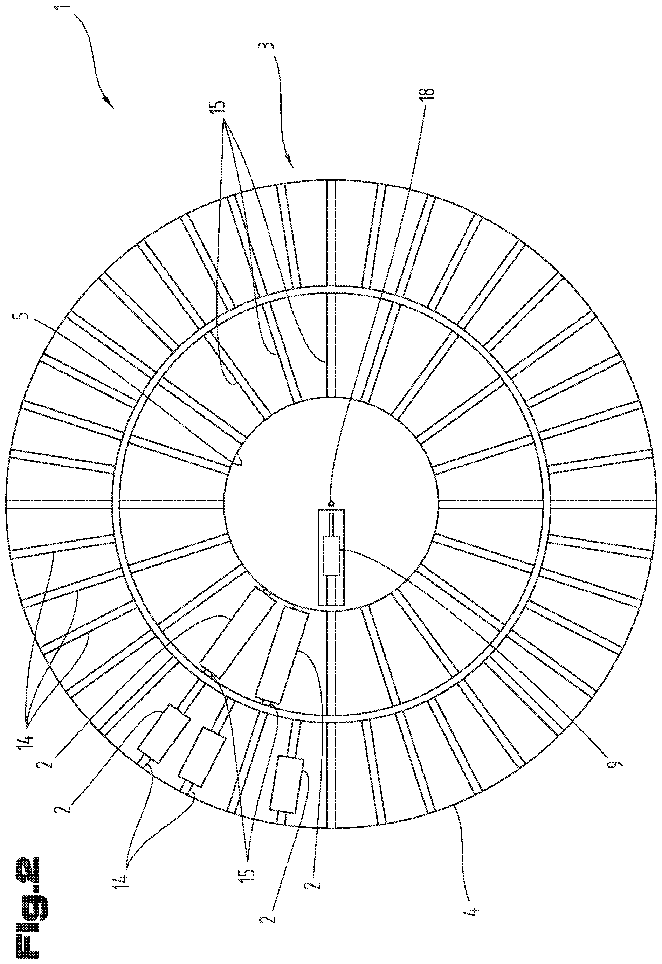

Dadurch ist auch der Winkelabstand zwischen benachbarten Führungsschienen 14 des äußeren Werkzeugspeichers 4 kleiner (hier: 9°) als der Winkelabstand zwischen benachbarten Führungsschienen 15 des inneren Werkzeugspeichers 5 (hier: 18°). Selbstverständlich sind Fig. 1 und 2 als illustrative Beispiele zu verstehen und ist jede mögliche Verteilung von radial verlaufenden oder eine radiale Richtungs-Komponente aufweisenden Führungsschienen möglich.

Fig. 2 zeigt einen Anwendungsfall, bei dem in den Führungsschienen 14 des äußeren Werkzeugspeichers 4 kürzere Biegewerkzeuge 2 gehalten sind als in den Führungsschienen 15 des inneren Werkzeugspeichers 5.

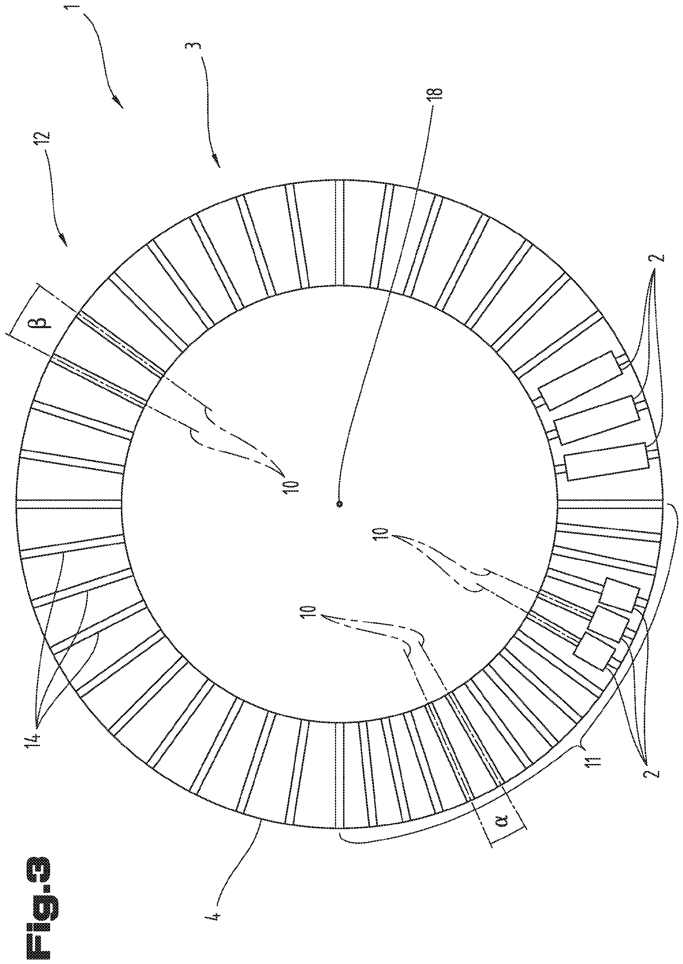

Fig. 3 zeigt eine Speichervorrichtung 1, die unabhängig von der Ausführungsform der Fig. 1 und 2 und unabhängig von der Anzahl an Werkzeugspeichern das Ziel der Erfindung erreicht. Die Speichereinheit 3 umfasst somit zumindest einen Werkzeugspeicher 4, 6, der ringförmig oder teilringförmig ist und eine Vielzahl von in radialer Richtung verlaufenden Führungsschienen 14, 15 zum Halten und Führen von Biegewerkzeugen 2 aufweist. Der zumindest eine Werkzeug-speicher weist entlang seines Umfanges einen ersten Abschnitt 11 auf, in dem der Winkelabstand zwischen benachbarten Führungsschienen 14, 15 kleiner ist als in einem zweiten Abschnitt 12 entlang seines Umfanges.

Anders ausgedrückt weist der Biegewerkzeugspeicher 4 einen ersten Abschnitt 11, in dem die Winkelabstände α zwischen benachbarten Führungsschienen 14 jeweils höchstens so groß sind wie ein erster Winkel, und einen zweiten Abschnitt 12, in dem die Winkelabstände β zwischen benachbarten Führungsschienen 14 jeweils zumindest so groß sind wie ein zweiter Winkel, wobei der zweite Winkel größer ist als der erste Winkel. In der dargestellten Ausführungsform sind die Winkelabstände in den jeweiligen Abschnitten 11, 12 im Wesentlichen konstant. D.h. in dem ersten Abschnitt 11 sind die Winkelabstände α zwischen benachbarten Führungsschienen 14 jeweils so groß sind wie der erste Winkel und in dem zweiten Abschnitt 12 sind die Winkelabstände β zwischen benachbarten Führungsschienen 14 jeweils so groß sind wie der zweite Winkel.

In einer bevorzugten Ausführungsform kann der zweite Winkel zumindest 1,3mal, bevorzugt zumindest 1,5mal, besonders bevorzugt zumindest 2mal, so groß sein wie der erste Winkel. Der Biegewerkzeugspeicher 4 aus Fig. 3 ist ringförmig, könnte in einer alternativen Ausführungsform aber auch teilringförmig oder scheibenförmig ausgebildet sein.

Es ist bevorzugt, wenn sich der erste Abschnitt 11 und der zweite Abschnitt 12 über einen Winkelbereich von zumindest 30°, vorzugsweise zumindest 60°, besonders bevorzugt zumindest 90°, entlang des Umfanges des Biegewerkzeugspeichers 4 erstrecken. Auch ist bevorzugt, wenn der erste Abschnitt 11 und der zweite Abschnitt 12 jeweils zumindest 3, bevorzugt zumindest 5, besonders bevorzugt zumindest 10, Führungsschienen 14 umfassen.

Aus Fig. 3 ist zu sehen, dass in Führungsschienen 14 des ersten Abschnittes 11 kürzere Biegewerkzeuge 2 gehalten sind als in Führungsschienen 14 des zweiten Abschnittes 12, wobei die Biegewerkzeuge 2 in den Führungsschienen 14 des ersten Abschnittes 11 den - auf die radiale Richtung bezogen - äußeren Enden der Führungsschienen 14 näher sind als den inneren Enden. In Fig. 3 sind sie im Bereich der äußeren Enden der Führungsschienen 14 angeordnet.

Ebenfalls aus Fig. 3 ersichtlich ist, dass in dem ersten Abschnitt 11 der Abstand zwischen den Längsachsen 10 benachbarter Führungsschienen 14 im Bereich ihrer - auf die radiale Richtung bezogen - inneren Enden höchstens so groß (vorzugsweise kleiner) ist als die Abmessung eines in einer Führungsschiene 14 des ersten Abschnittes 11 gehaltenen Biegewerkzeuges 2 senkrecht zur Richtung der Führungsschiene 14.

In den Führungsschienen des ersten Abschnittes 11 können kürzere Biegewerkzeuge 2 gehalten sein als in den Führungsschienen des zweiten Abschnittes 12.

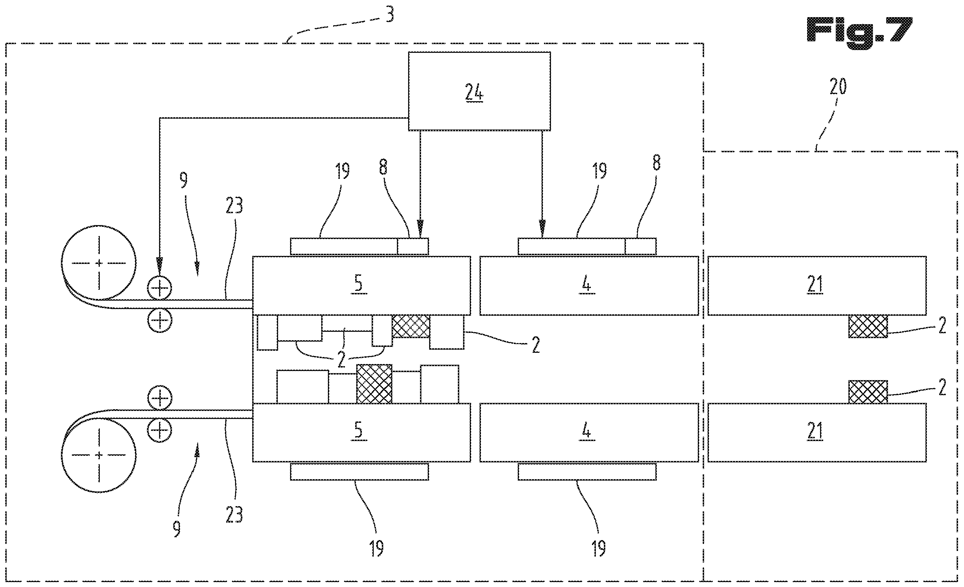

Die Fig. 7 zeigt, dass der äußere Werkzeugspeicher 4 und der innere Werkzeugspeicher 5 der Speichereinheit 3 jeweils einen eigenen Drehantrieb 19 aufweisen können. Diese werden - ebenso wie der Antrieb der Transfereinrichtung - durch eine Steuereinrichtung 24 angesteuert.

In einer alternativen Ausführungsform können zumindest zwei Werkzeugspeicher der Speichereinheit 3 einen gemeinsamen Drehantrieb aufweisen, von dem sie (mittels einer Kupplung, z.B. eines Kupplungsringes) einzeln abkoppelbar sind.

Die Speichereinheit 3 umfasst vorzugsweise zumindest einen Sensor 8 (siehe Fig. 7), insbesondere einen Winkelsensor, zur Bestimmung der Drehstellung des äußeren Werkzeugspeichers 4 und/oder des zumindest einen inneren Werkzeugspeichers 5 umfasst.

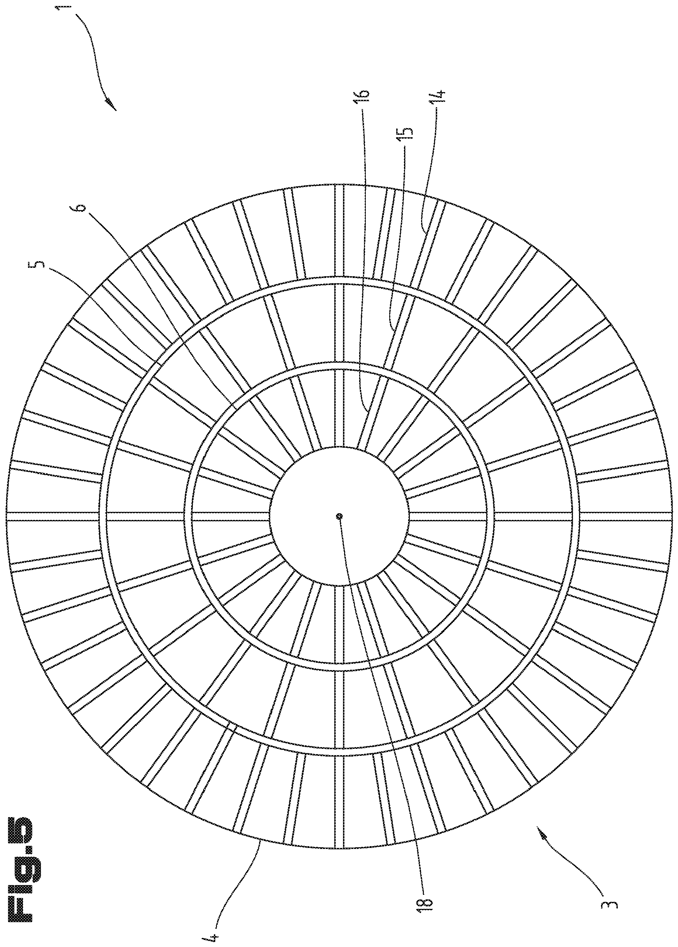

Fig. 5 zeigt eine Speichervorrichtung 1, bei der die Speichereinheit 3 zumindest zwei innere Werkzeugspeicher 5, 6 umfasst, die relativ zueinander drehbar sind.

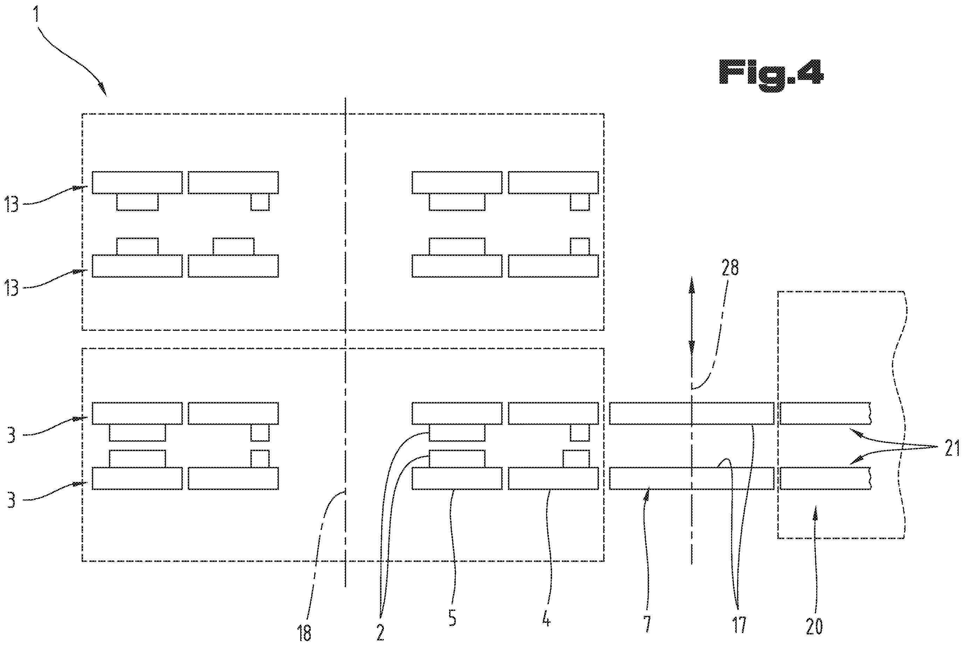

Fig. 4 zeigt eine Ausführungsform mit mehreren Speichereinheiten 3, 13, die übereinander und (hier auch) konzentrisch zueinander angeordnet sind.

Die Führungsschienen der Werkzeugspeicher einer ersten Speichereinheit und die Führungsschienen der Werkzeugspeicher einer zweiten Speichereinheit sind einander zugewandt (siehe jeweils unterer Teil und oberer Teil der Fig. 4).

Zu sehen ist auch eine Zwischenablage 7, die eine Führungsschiene 17 zum Halten und Führen von Biegewerkzeugen 2 aufweist. Die Zwischenablage 7 ist zwischen den Speichereinheiten 3, 13 (hier: entlang des Doppelpfeiles) verfahrbar. Bevorzugt wird, wenn die Zwischenablage 7 auch um eine Drehachse 28 drehbar ist. Dadurch kann die Orientierung eines Biegewerkzeuges oder einer Reihe von hintereinander angeordneten Biegewerkzeugen (um 180°) verändert werden. Das Zusammenstellen der Biegewerkzeuge und das Beschicken der Biegepresse werden dadurch um eine weitere Option erweitert.

Der - im linken Teil der Fig. 7 dargestellte - Gegenstand stellt eine Beschickungsvorrichtung, insbesondere Wechselvorrichtung, zum Beschicken einer Biegepresse 20 mit Biegewerkzeugen 2 und/oder zum Auswechseln von einem oder mehreren in einer Biegepresse 20 eingesetzten Biegewerkzeugen 2 dar. Die Werkzeughalterungen 21 der Biegepresse sind gleichzeitig Führungsschienen entlang derer die Biegewerkzeuge an ihre gewünschte Position verfahren werden.

Mit der erfindungsgemäßen Speichervorrichtung kann nun ein Verfahren zum Ablegen zumindest eines Biegewerkzeuges 2 in einer Speichervorrichtung 1 und/oder zur Entnahme zumindest eines Biegewerkzeuges 2 aus einer Speichervorrichtung 1 durchgeführt werden Dabei wird das zumindest eine Biegewerkzeug 2 entlang von Führungsschienen 14, 15, 16 der Werkzeugspeicher 4, 5, 6 verschoben.

Das Verfahren erfolgt mit einem Rangiervorgang, bei dem zumindest ein Biege-werkzeug 2 von einer Führungsschiene 14, 15 des einen Werkzeugspeichers 4, 5 in eine Führungsschiene 15, 14 des anderen Werkzeugspeichers 5, 4 verschoben wird (Fig. 2) und bei dem der eine Werkzeugspeicher 4, 5 und der andere Werkzeugspeicher 5, 4 relativ zueinander gedreht werden.

Wie aus Fig. 2 zu sehen kann es bevorzugt sein, wenn in den Führungsschienen 14 des äußeren Werkzeugspeichers 4 kürzere Biegewerkzeuge 2 abgelegt werden als in den Führungsschienen 15 des inneren Werkzeugspeichers 5.

Bei einer Speichervorrichtung 1 gemäß Fig. 3 wird bevorzugt, wenn in den Führungsschienen des ersten Abschnittes 11 kürzere Biegewerkzeuge 2 abgelegt werden als in den Führungsschienen des zweiten Abschnittes 12.

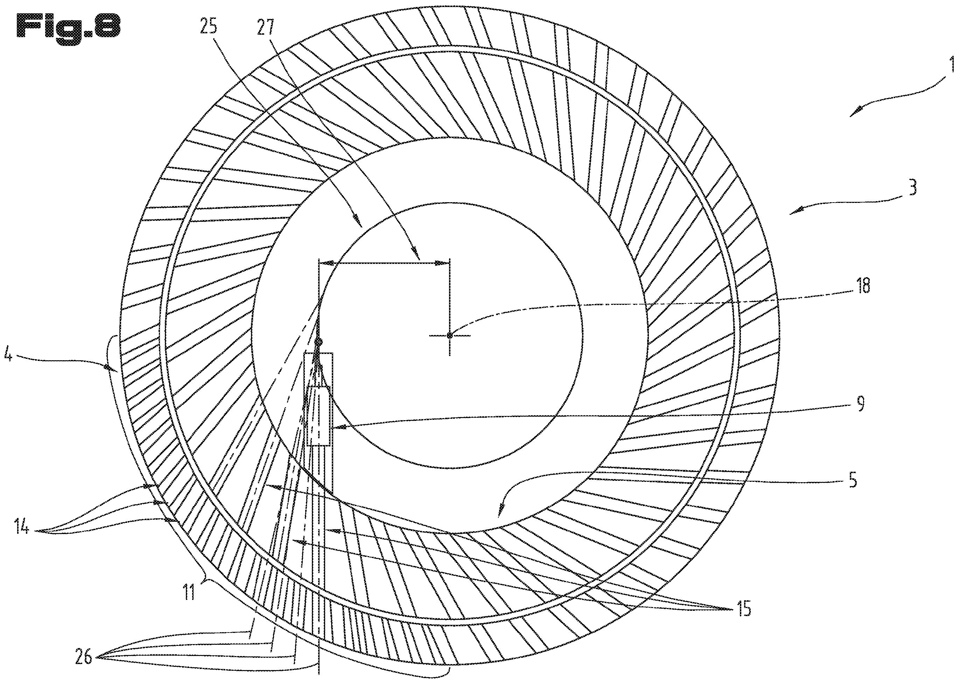

Fig. 8 zeigt eine alternative Ausführungsform einer Biegewerkzeug-Speichervorrichtung 1 zum Speichern von Biegewerkzeugen 2. Eine Speichereinheit 3 der Biegewerkzeug-Speichervorrichtung 1 umfasst einen äußeren Werkzeugspeicher 4 und einen inneren Werkzeugspeicher 5, die eine Vielzahl von Führungsschienen 14, 15 aufweisen. Die Werkzeugspeicher 4, 5 können ringförmig (alternativ: teilringförmig) ausgebildet sein. Die Führungsschienen 14, 15 verlaufen in Richtungen 26, die - bezogen auf die Ringform oder Teilringform des jeweiligen Werkzeugspeichers - eine tangentiale Komponente aufweisen. Die Führungsschienen 14, 15 verlaufen auch in diesem Ausführungsbeispiel von innen nach außen bzw. vom Innenumfang zum Außenumfang des Werkzeugspeichers. Sie besitzen somit - bezogen auf die Ringform oder Teilringform des jeweiligen Werkzeugspeichers - (zusätzlich zur tangentialen Komponente) auch eine radiale Komponente. Bezogen auf einen (gedachten) Kreisumfang 25, der konzentrisch zu dem äußeren Werkzeugspeicher 4 und dem inneren Werkzeugspeicher 5 liegt, verlaufen die Führungsschienen (rein) tangential. Der gedachte Kreisumfang 25 ist kleiner als der Innenumfang des inneren Werkzeugspeichers 5. In dieser Ausführungsform weist die Transfereinrichtung 9 einen Abstand 27 (Offset) von dem Mittelpunkt bzw. der Drehachse 18 auf. Der Abstand 27 entspricht dabei im Wesentlichen dem Radius des (gedachten) Kreises mit dem Kreisumfang 25. Diese Variante der Biegewerkzeug-Speichervorrichtung 1 hat ein asymmetrisches Design, wodurch die Belastung, insbesondere an der Vorderseite der Biegepresse 20 reduziert werden kann.

Selbstverständlich können alle Ausführungsformen, die in den Fig. 1-7 dargestellt sind, auch mit Führungsschienen realisiert werden, deren Verlaufs-Richtungen - wie beispielhaft in Fig. 8 dargestellt - eine tangentiale Komponente aufweisen.

**Bezugszeichenaufstellung**

| | | | |
|---|---|---|---|
| 1 | Biegewerkzeug-Speichervorrichtung | 28 | Drehachse |
| | | α | Winkelabstand |
| 2 | Biegewerkzeug | β | Winkel ab stand |
| 3 | Speichereinheit | | |
| 4 | Äußerer Werkzeugspeicher | | |
| 5 | Innerer Werkzeugspeicher | | |
| 6 | Innerer Werkzeugspeicher | | |
| 7 | Zwischenablage | | |
| 8 | Sensor | | |
| 9 | Transfereinrichtung | | |
| 10 | Längsachse | | |
| 11 | Erster Abschnitt | | |
| 12 | Zweiter Abschnitt | | |
| 13 | Speichereinheit | | |
| 14 | Führungsschiene | | |
| 15 | Führungsschiene | | |
| 16 | Führungsschiene | | |
| 17 | Führungsschiene | | |
| 18 | Drehachse | | |
| 19 | Antrieb | | |
| 20 | Biegepresse | | |
| 21 | Werkzeughalterung | | |
| 22 | Shuttle | | |
| 23 | Zug- und/oder Druckübertragungsmittel | | |
| 24 | Steuerung | | |
| 25 | Kreisumfang | | |
| 26 | Richtung mit tangentialer Komponente | | |
| 27 | Abstand | | |

## Patentansprüche

1. Biegewerkzeug-Speichervorrichtung (1) zum Speichern von Biegewerkzeugen (2), umfassend zumindest eine Speichereinheit (3), die einen äußeren Werkzeugspeicher (4) umfasst, der ringförmig oder teilringförmig ist und eine Vielzahl von Führungsschienen (14) zum Halten und Führen von Biegewerkzeugen (2) aufweist, **dadurch gekennzeichnet, dass** die Speichereinheit (3) zumindest einen inneren Werkzeugspeicher (5, 6) umfasst, der innerhalb des äußeren Werkzeugspeichers (4) angeordnet ist und eine Vielzahl von Führungsschienen (15, 16) zum Halten und Führen von Biegewerkzeugen (2) aufweist, und dass der äußere Werkzeugspeicher (4) und der innere Werkzeugspeicher (5, 6) relativ zueinander drehbar sind, wobei zumindest eine Führungsschiene (14) des äußeren Werkzeugspeichers (4) in verschiedenen Relativdrehstellungen zwischen äußerem Werkzeugspeicher (4) und innerem Werkzeugspeicher (5) jeweils mit einer anderen Führungsschiene (15, 16) des inneren Werkzeugspeichers (5, 6) in fluchtender Ausrichtung steht.

2. Speichervorrichtung nach Anspruch 1, **dadurch gekennzeichnet, dass** der zumindest eine innere Werkzeugspeicher (5, 6) ringförmig oder teilringförmig ist und/oder dass der zumindest eine innere Werkzeugspeicher (5, 6) konzentrisch zum äußeren Werkzeugspeicher (4) angeordnet ist.

3. Speichervorrichtung nach Anspruch 1 oder 2, **dadurch gekennzeichnet, dass** der Innendurchmesser des äußeren Werkzeugspeichers (4) im Wesentlichen dem Außendurchmesser des inneren Werkzeugspeichers (5) entspricht und/oder dass die Speichereinheit (3) zumindest zwei innere Werkzeugspeicher (5, 6) umfasst, die relativ zueinander drehbar sind.

4. Speichervorrichtung nach einem der vorhergehenden Ansprüche, **dadurch gekennzeichnet, dass** die Führungsschienen (14) des äußeren Werkzeugspeichers (4) und die Führungsschienen (15, 16) des zumindest einen inneren Werkzeugspeichers (5, 6) in radialer Richtung oder in einer Richtung mit radialer Komponente verlaufen.

5. Speichervorrichtung nach einem der vorhergehenden Ansprüche, **dadurch gekennzeichnet, dass** die Führungsschienen (14) des äußeren Werkzeugspeichers (4) und die Führungsschienen (15, 16) des zumindest einen inneren Werkzeugspeichers (5, 6) jeweils in Richtungen mit tangentialer Komponente verlaufen.

6. Speichervorrichtung nach einem der vorhergehenden Ansprüche, **dadurch gekennzeichnet, dass** der äußere Werkzeugspeicher (4) und der innere Werkzeugspeicher (5) jeweils einen geschlossenen Ring bilden und dass die Anzahl der Führungsschienen (14) des äußeren Werkzeugspeichers (4) größer, vorzugsweise um zumindest 1,3mal größer, besonders bevorzugt um zumindest 1,5mal größer, ist als die Anzahl der Führungsschienen (15) des inneren Werkzeugspeichers (5).

7. Speichervorrichtung nach einem der vorhergehenden Ansprüche, **dadurch gekennzeichnet, dass** der Winkelabstand zwischen benachbarten Führungsschienen (14) des äußeren Werkzeugspeichers (4) kleiner ist als der Winkelabstand zwischen benachbarten Führungsschienen (15) des inneren Werkzeugspeichers (5) und/oder dass in den Führungsschienen (14) des äußeren Werkzeugspeichers (4) kürzere Biegewerkzeuge (2) gehalten sind als in den Führungsschienen (15) des inneren Werkzeugspeichers (5).

8. Speichervorrichtung nach einem der vorhergehenden Ansprüche, **dadurch gekennzeichnet, dass** in dem äußeren Werkzeugspeicher (4) die Winkelabstände zwischen benachbarten Führungsschienen (14) jeweils höchstens so groß sind wie ein erster Winkel, und dass in dem inneren Werkzeugspeicher (5) die Winkelabstände zwischen benachbarten Führungsschienen (15) jeweils zumindest so groß sind wie ein zweiter Winkel, wobei der zweite Winkel größer ist als der erste Winkel, wobei vorzugsweise der zweite Winkel zumindest 1,3mal, bevorzugt zumindest 1,5mal, besonders bevorzugt zumindest 2mal, so groß ist wie der erste Winkel.

9. Speichervorrichtung nach einem der vorhergehenden Ansprüche, **dadurch gekennzeichnet, dass** der äußere Werkzeugspeicher (4) und der zumindest eine innere Werkzeugspeicher (5) drehbar sind, vorzugsweise um eine gemeinsame Drehachse (18), wobei vorzugsweise der äußere Werkzeugspeicher (4) und der innere Werkzeugspeicher (5) der Speichereinheit (3) jeweils einen eigenen Drehantrieb (19) aufweisen oder zumindest zwei Werkzeugspeicher (4, 5, 6) der Speichereinheit (3) einen gemeinsamen Drehantrieb (19) aufweisen, von dem sie einzeln abkoppelbar sind.

10. Speichervorrichtung nach einem der vorhergehenden Ansprüche, **dadurch gekennzeichnet, dass** die Speichereinheit (3) zumindest einen Sensor (8), insbesondere einen Winkelsensor, zur Bestimmung der Drehstellung des äußeren Werkzeugspeichers (4) und/oder des zumindest einen inneren Werkzeugspeichers (5) umfasst und/oder dass innerhalb des inneren Werkzeugspeichers (5) eine Transfereinrichtung (9) zum Verschieben der Biegewerkzeuge (2) entlang der Führungsschienen (14, 15) angeordnet ist.

11. Speichervorrichtung nach einem der vorhergehenden Ansprüche, **dadurch gekennzeichnet, dass** zumindest ein Werkzeugspeicher (4, 5, 6) entlang seines Umfanges einen ersten Abschnitt (11) aufweist, in dem der Winkelabstand zwischen benachbarten Führungsschienen (14, 15, 16) kleiner ist als in einem zweiten Abschnitt (12) entlang seines Umfanges, wobei vorzugsweise in den Führungsschienen des ersten Abschnittes (11) kürzere Biegewerkzeuge (2) gehalten sind als in den Führungsschienen des zweiten Abschnittes (12).

12. Speichervorrichtung nach Anspruch 11, **dadurch gekennzeichnet, dass** in dem ersten Abschnitt (11) die Winkelabstände zwischen benachbarten Führungsschienen (14, 15, 16) jeweils höchstens so groß sind wie ein erster Winkel und dass in dem zweiten Abschnitt (12) die Winkelabstände zwischen benachbarten Führungsschienen (14, 15, 16) jeweils zumindest so groß sind wie ein zweiter Winkel, wobei der zweite Winkel größer ist als der erste Winkel, wobei vorzugsweise der zweite Winkel zumindest 1,3mal, bevorzugt zumindest 1,5mal, besonders bevorzugt zumindest 2mal, so groß ist wie der erste Winkel.

13. Speichervorrichtung nach Anspruch 12, **dadurch gekennzeichnet, dass** in dem ersten Abschnitt (11) die Winkelabstände zwischen benachbarten Führungsschienen (14, 15, 16) jeweils so groß sind wie der erste Winkel und/oder dass in dem zweiten Abschnitt (12) die Winkelabstände zwischen benachbarten Führungsschienen (14, 15, 16) jeweils so groß sind wie der zweite Winkel.

14. Speichervorrichtung nach einem der vorhergehenden Ansprüche, **dadurch gekennzeichnet, dass** die Speichervorrichtung (1) zumindest zwei Speichereinheiten (3, 13) aufweist, die übereinander und vorzugsweise konzentrisch zueinander angeordnet sind, wobei vorzugsweise die Führungsschienen der Werkzeugspeicher einer ersten Speichereinheit (3) und die Führungsschienen der Werkzeugspeicher einer zweiten Speichereinheit (13) einander zugewandt sind und/oder wobei vorzugsweise die Speichervorrichtung (1) zumindest eine Zwischenablage (7) umfasst, die zumindest eine Führungsschiene (17) zum Halten und Führen von Biegewerkzeugen (2) aufweist, wobei die Zwischenablage (7) zwischen den Speichereinheiten (3, 13) verfahrbar ist.

15. Beschickungsvorrichtung, insbesondere Wechselvorrichtung, zum Beschicken einer Biegepresse (20) mit Biegewerkzeugen (2) und/oder zum Auswechseln von einem oder mehreren in einer Biegepresse (20) eingesetzten Biegewerkzeugen (2), umfassend eine Speichervorrichtung (1) nach einem der vorhergehenden Ansprüche.

16. Verfahren zum Ablegen zumindest eines Biegewerkzeuges (2) in einer Speichervorrichtung (1) und/oder zur Entnahme zumindest eines Biegewerkzeuges (2) aus einer Speichervorrichtung (1), **dadurch gekennzeichnet, dass** die Speichervorrichtung (1) nach einem der Ansprüche 1 bis 14 ausgebildet ist und dass das zumindest eine Biegewerkzeug (2) entlang von Führungsschienen (14, 15, 16) der Werkzeugspeicher (4, 5, 6) verschoben wird.

17. Verfahren nach Anspruch 16, **dadurch gekennzeichnet, dass** das Verfahren zumindest einen Rangiervorgang umfasst, bei dem zumindest ein Biegewerkzeug (2) von einer Führungsschiene (14, 15) des einen Werkzeugspeichers (4, 5) in eine Führungsschiene (15, 14) des anderen Werkzeugspeichers (5, 4) verschoben wird und bei dem der eine Werkzeugspeicher (4, 5) und der andere Werkzeugspeicher (5, 4) relativ zueinander gedreht werden.

18. Verfahren nach Anspruch 16 oder 17, **dadurch gekennzeichnet, dass** in den Führungsschienen (14) des äußeren Werkzeugspeichers (4) kürzere Biegewerkzeuge (2) abgelegt werden als in den Führungsschienen (15) des inneren Werkzeugspeichers (5) und/oder dass die Speichervorrichtung (1) nach einem der Ansprüche 11 bis 13 ausgebildet ist, wobei in den Führungsschienen des ersten Abschnittes (11) kürzere Biegewerkzeuge (2) abgelegt werden als in den Führungsschienen des zweiten Abschnittes (12).

## Claims

1. A bending tool storage device (1) for storing bending tools (2), comprising at least one storage unit (3), which comprises an outer tool storage (4) which is ring-shaped or partial ring-shaped and has a plurality of guide rails (14) for holding and guiding bending tools (2), **characterized in that** the storage unit (3) comprises at least one inner tool storage (5, 6) which is arranged inside the outer tool storage (4) and has a plurality of guide rails (15, 16) for holding and guiding bending tools (2), and **in that** the outer tool storage (4) and the inner tool storage (5, 6) are rotatable relative to one another, wherein, in different positions of relative rotation between outer tool storage (4) and inner tool storage (5), at least one guide rail (14) of the outer tool storage (4) is in each case in aligned orientation with another guide rail (15, 16) of the inner tool storage (5, 6).

2. The storage device according to claim 1, **characterized in that** the at least one inner tool storage (5, 6) is ring-shaped or partial ring-shaped and/or **in that** the at least one inner tool storage (5, 6) is arranged concentrically with the outer tool storage (4).

3. The storage device according to claim 1 or 2, **characterized in that** the inside diameter of the outer tool storage (4) essentially corresponds to the outside diameter of the inner tool storage (5) and/or **in that** the storage unit (3) comprises at least two inner tool storages (5, 6) which are rotatable relative to one another.

4. The storage device according to one of the preceding claims, **characterized in that** the guide rails (14) of the outer tool storage (4) and the guide rails (15, 16) of the at least one inner tool storage (5, 6) run in a radial direction or in a direction with radial component.

5. The storage device according to one of the preceding claims, **characterized in that** the guide rails (14) of the outer tool storage (4) and the guide rails (15, 16) of the at least one inner tool storage (5, 6) each run in directions with tangential component.

6. The storage device according to one of the preceding claims, **characterized in that** the outer tool storage (4) and the inner tool storage (5) each form a closed ring and that the number of guide rails (14) of the outer tool storage (4) is greater, preferably by at least 1.3 times greater, especially preferred by at least 1.5 times greater, than the number of guide rails (15) of the inner tool storage (5).

7. The storage device according to one of the preceding claims, **characterized in that** the angular distance between adjacent guide rails (14) of the outer tool storage (4) is less than the angular distance between adjacent guide rails (15) of the inner tool storage (5) and/or that shorter bending tools (2) are held in the guide rails (14) of the outer tool storage (4) than in the guide rails (15) of the inner tool storage (5).

8. The storage device according to one of the preceding claims, **characterized in that**, in the outer tool storage (4), the angular distances between adjacent guide rails (14) are in each case no greater than a first angle, and that, in the inner tool storage (5), the angular distances between adjacent guide rails (15) are in each case at least as great as a second angle, wherein the second angle is greater than the first angle, wherein preferably the second angle is at least 1.3 times, preferred at least 1.5 times, especially preferred at least 2 times, as great as the first angle.

9. The storage device according to one of the preceding claims, **characterized in that** the outer tool storage (4) and the at least one inner tool storage (5) are rotatable, preferably about a common axis of rotation (18), wherein preferably, the outer tool storage (4) and the inner tool storage (5) of the storage unit (3) each have their own rotary drive (19) or at least two tool storages (4, 5, 6) of the storage unit (3) have a common rotary drive (19), from which they can be individually decoupled.

10. The storage device according to one of the preceding claims, **characterized in that** the storage unit (3) comprises at least one sensor (8), in particular an angle sensor, for determining the rotational position of the outer tool storage (4) and/or the at least one inner tool storage (5) and/or **in that** a transfer device (9) for moving the bending tools (2) along the guide rails (14, 15) is arranged inside the inner tool storage (5).

11. The storage device according to one of the preceding claims, **characterized in that** at least one tool storage (4, 5, 6) has along its circumference a first section (11), in which the angular distance between adjacent guide rails (14, 15, 16) is less than in a second section (12) along its circumference, wherein preferably shorter bending tools (2) are held in the guide rails of the first section (11) than in the guide rails of the second section (12).

12. The storage device according to claim 11, **characterized in that**, in the first section (11), the angular distances between adjacent guide rails (14, 15, 16) are in each case no greater than a first angle and that, in the second section (12), the angular distances between adjacent guide rails (14, 15, 16) are in each case at least as great as a second angle, wherein the second angle is greater than the first angle, wherein preferably the second angle is at least 1.3 times, preferred at least 1.5 times, especially preferred at least 2 times as great as the first angle.

13. The bending tool storage device according to claim 12, **characterized in that**, in the first section (11), the angular distances between adjacent guide rails (14, 15, 16) are in each case as great as the first angle and/or **in that**, in the second section (12), the angular distances between adjacent guide rails (14, 15, 16) are in each case as great as the second angle.

14. The storage device according to one of the preceding claims, **characterized in that** the storage device (1) has at least two storage units (3, 13) which are arranged above one another and preferably concentrically with one another, wherein preferably the guide rails of the tool storages of a first storage unit (3) and the guide rails of the tool storages of a second storage unit (13) face one another and/or wherein preferably the storage device (1) comprises at least one intermediate store (7) which has at least one guide rail (17) for holding and guiding bending tools (2), wherein the intermediate store (7) can be moved between the storage units (3, 13).

15. A loading device, in particular a changing device, for loading a bending press (20) with bending tools (2) and/or for changing one or more bending tools (2) inserted in a bending press (20), comprising a storage device (1) according to one of the preceding claims.

16. A method for depositing at least one bending tool (2) in a storage device (1) and/or for removing at least one bending tool (2) from a storage device (1), **characterized in that** the storage device (1) is designed according to one of claims 1 to 14 and **in that** the at least one bending tool (2) is moved along guide rails (14, 15, 16) of the tool storages (4, 5, 6).

17. The method according to claim 16, **characterized in that** the method comprises at least one shunting operation in which at least one bending tool (2) is moved from a guide rail (14, 15) of the one tool storage (4, 5) into a guide rail (15, 14) of the other tool storage (5, 4), and in which the one tool storage (4, 5) and the other tool storage (5, 4) are rotated relative to one another.

18. The method according to claim 16 or 17, **characterized in that** shorter bending tools (2) are deposited in the guide rails (14) of the outer tool storage (4) than in the guide rails (15) of the inner tool storage (5) and/or that the storage device (1) is designed according to one of claims 11 to 13, wherein shorter bending tools (2) are deposited in the guide rails of the first section (11) than in the guide rails of the second section (12).

## Revendications

1. Dispositif de stockage d'outils de pliage (1) pour le stockage d'outils de pliage (2), comprenant au moins une unité de stockage (3), qui comprend un magasin d'outils externe (4) qui présente une forme annulaire ou partiellement annulaire et qui comprend une pluralité de rails de guidage (14) pour le maintien et le guidage d'outils de pliage (2), **caractérisé en ce que** l'unité de stockage (3) comprend au moins un magasin d'outils interne (5, 6), qui est disposé à l'intérieur du magasin d'outils externe (4) et qui comprend une pluralité de rails de guidage (15, 16) pour le maintien et le guidage d'outils de pliage (2) et **en ce que** le magasin d'outils externe (4) et le magasin d'outils interne (5, 6) sont rotatifs l'un par rapport à l'autre, au moins un rail de guidage (14) du magasin d'outils externe (4) étant aligné, dans différentes positions de rotation relative entre le magasin d'outils externe (4) et le magasin d'outils interne (5), avec un autre rail de guidage (15, 16) du magasin d'outils interne (5, 6).

2. Dispositif de stockage selon la revendication 1, **caractérisé en ce que** l'au moins un magasin d'outils interne (5, 6) présente une forme annulaire ou partiellement annulaire et/ou **en ce que** l'au moins un magasin d'outils interne (5, 6) est disposé de manière concentrique par rapport au magasin d'outils externe (4).

3. Dispositif de stockage selon la revendication 1 ou 2, **caractérisé en ce que** le diamètre intérieur du magasin d'outils externe (4) correspond globalement au diamètre extérieur du magasin d'outils interne (5) et/ou **en ce que** l'unité de stockage (3) comprend au moins deux magasins d'outils internes (5, 6), qui sont rotatifs l'un par rapport à l'autre.

4. Dispositif de stockage selon l'une des revendications précédentes, **caractérisé en ce que** les rails de guidage (14) du magasin d'outils externe (4) et les rails de guidage (15, 16) de l'au moins un magasin d'outils interne (5, 6) s'étendent dans la direction radiale ou dans une direction avec une composante radiale.

5. Dispositif de stockage selon l'une des revendications précédentes, **caractérisé en ce que** les rails de guidage (14) du magasin d'outils externe (4) et les rails de guidage (15, 16) de l'au moins un magasin d'outils interne (5, 6) s'étendent dans des directions avec une composante tangentielle.

6. Dispositif de stockage selon l'une des revendications précédentes, **caractérisé en ce que** le magasin d'outils externe (4) et le magasin d'outils interne (5) forment chacun un anneau fermé et **en ce que** le nombre de rails de guidage (14) du magasin d'outils externe (4) est supérieur, de préférence au moins 1,3 fois plus, plus particulièrement au moins 1,5 fois plus, au nombre de rails de guidage (15) du magasin d'outils interne (5).

7. Dispositif de stockage selon l'une des revendications précédentes, **caractérisé en ce que** la distance angulaire entre des rails de guidage (14) adjacents du magasin d'outils externe (4) est inférieure à la distance angulaire entre des rails de guidage (15) du magasin d'outils interne (5) et/ou **en ce que**, dans les rails de guidage (14) du magasin d'outils externe (4), sont maintenus des outils de pliage (2) plus courts que ceux qui sont maintenus dans les rails de guidage (15) du magasin d'outils interne (5).

8. Dispositif de stockage selon l'une des revendications précédentes, **caractérisé en ce que**, dans le magasin d'outils externe (4), les distances angulaires entre des rails de guidage (14) adjacents sont au maximum aussi grandes qu'un premier angle et **en ce que**, dans le magasin d'outils interne (5), les distances angulaires entre des rails de guidage (15) adjacents sont au moins aussi grandes qu'un deuxième angle, le deuxième angle étant supérieur au premier angle, de préférence le deuxième angle étant au moins 1,3 fois, de préférence au moins 1,5 fois, plus particulièrement de préférence au moins 2 fois plus grand que le premier angle.

9. Dispositif de stockage selon l'une des revendications précédentes, **caractérisé en ce que** le magasin d'outils externe (4) et l'au moins un magasin d'outils interne (5) sont rotatifs, de préférence autour d'un axe de rotation commun (18), de préférence le magasin d'outils externe (4) et le magasin d'outils interne (5) de l'unité de stockage (3) comprenant chacun leur propre entraînement rotatif (19) ou au moins deux magasins d'outils (4, 5, 6) de l'unité de stockage (3) comprenant un entraînement rotatif (19) commun, dont ils peuvent être découplés individuellement.

10. Dispositif de stockage selon l'une des revendications précédentes, **caractérisé en ce que** l'unité de stockage (3) comprend au moins un capteur (8), plus particulièrement un capteur d'angle, pour la détermination de la position de rotation du magasin d'outils externe (4) et/ou de l'au moins un magasin d'outils interne (5) et/ou **en ce que**, à l'intérieur du magasin d'outils interne (5), est disposé un dispositif de transfert (9) pour le coulissement des outils de pliage (2) le long des rails de guidage (14, 15).

11. Dispositif de stockage selon l'une des revendications précédentes, **caractérisé en ce qu'**au moins un magasin d'outils (4, 5, 6) comprend, le long de sa circonférence, une première portion (11), dans laquelle la distance angulaire entre des rails de guidage (14, 15, 16) adjacents est plus petite que dans une deuxième portion (12) le long de sa circonférence, de préférence, dans les rails de guidage de la première portion (11), sont maintenus des outils de pliage (2) plus courts que dans les rails de guidage de la deuxième portion (12).

12. Dispositif de stockage selon la revendication 11, **caractérisé en ce que**, dans la première portion (11), les distances angulaires entre des rails de guidage (14, 15, 16) adjacents sont au maximum aussi grandes qu'un premier angle et **en ce que**, dans la deuxième portion (12), les distances angulaires entre des rails de guidage (14, 15, 16) adjacents sont au moins aussi grandes qu'un deuxième angle, le deuxième angle étant supérieur au premier angle, de préférence le deuxième angle étant au moins 1,3 fois, de préférence au moins 1,5 fois, plus particulièrement de préférence au moins 2 fois plus grand que le premier angle.

13. Dispositif de stockage selon la revendication 12, **caractérisé en ce que**, dans la première portion (11), les distances angulaires entre des rails de guidage (14, 15, 16) adjacents sont aussi grandes que le premier angle et/ou **en ce que**, dans la deuxième portion (12), les distances angulaires entre des rails de guidage (14, 15, 16) adjacents sont aussi grandes que le deuxième angle.

14. Dispositif de stockage selon l'une des revendications précédentes, **caractérisé en ce que** le dispositif de stockage (1) comprend au moins deux unités de stockage (3, 13) qui sont disposées l'une sur l'autre et de préférence de manière concentrique l'une par rapport à l'autre, de préférence les rails de guidage des magasins d'outils d'une première unité de stockage (3) et les rails de guidage des magasins d'outils d'une deuxième unité de stockage (13) étant orientés les uns vers les autres et/ou de préférence le dispositif de stockage (1) comprenant au moins un dépôt intermédiaire (7) qui comprend au moins un rail de guidage (17) pour le maintien et le guidage d'outils de pliage (2), le dépôt intermédiaire (7) pouvant être déplacé entre les unités de stockage (3, 13).

15. Dispositif d'alimentation, plus particulièrement dispositif de changement, pour l'alimentation d'une presse plieuse (20) en outils de pliage (2) et/ou pour le changement d'un ou plusieurs outils de pliage (2) utilisés dans une presse plieuse (20), comprenant un dispositif de stockage (1) selon l'une des revendications précédentes.

16. Procédé de rangement d'au moins un outil de pliage (2) dans un dispositif de stockage (1) et/ou de prélèvement d'un outil de pliage (2) dans un dispositif de stockage (1), **caractérisé en ce que** le dispositif de stockage (1) est conçu selon l'une des revendications 1 à 14 et **en ce que** l'au moins un outil de pliage (2) est coulissé le long de rails de guidage (14, 15, 16) des magasins d'outils (4, 5, 6).

17. Procédé selon la revendication 16, **caractérisé en ce que** le procédé comprend au moins un processus de manoeuvre, dans lequel au moins un outil de pliage (2) est coulissé d'un rail de guidage (14, 15) d'un magasin d'outils (4, 5) vers un rail de guidage (15, 14) de l'autre magasin d'outils (5, 4) et dans lequel le magasin d'outils (4, 5) et l'autre magasin d'outils (5, 4) sont tournés l'un par rapport à l'autre.

18. Procédé selon la revendication 16 ou 17, **caractérisé en ce que**, dans les rails de guidage (14) du magasin d'outils externe (4) sont rangés des outils de pliage (2) plus courts que dans les rails de guidage (15) du magasin d'outils interne (5) et/ou **en ce que** le dispositif de stockage (1) est conçu selon l'une des revendications 11 à 13, moyennant quoi, dans les rails de guidage de la première portion (11), sont rangés des outils de pliage (2) plus courts que dans les rails de guidage de la deuxième portion (12).
